# EUROPÄISCHE PATENTSCHRIFT

(11) **EP 4 172 003 B1**
(45) Veröffentlichungstag und Bekanntmachung des Hinweises auf die Patenterteilung: **18.06.2025**
(21) Anmeldenummer: 21719060.2
(22) Anmeldetag: 06.04.2021
(51) Int. Cl.: B60R 13/01

(54) **LADEBODENFIXIERUNGSSYSTEM**
LOADING FLOOR FIXATION SYSTEM
SYSTÈME DE FIXATION DE PLANCHER DE CHARGEMENT

(30) Priorität: 25.06.2020 DE 102020116798
(43) Veröffentlichungstag der Anmeldung: 03.05.2023
(73) Patentinhaber: Audi AG, 85045 Ingolstadt (DE)
(72) Erfinder: AMLER, Manuel, 85049 Ingolstadt (DE); EBERL, Thomas, 85081 Ingolstadt (DE)
(86) Internationale Anmeldenummer: PCT/EP2021/058834
(87) Internationale Veröffentlichungsnummer: WO 2021/259531

(56) Entgegenhaltungen:
- DE-A1- 102014 015 030
- US-A1- 2015 251 712

## Beschreibung

Die vorliegende Erfindung betrifft ein System zur Ladebodenfixierung in einem Kraftfahrzeug, umfassend eine Ladebodenauflage und zumindest einen Ladeboden, wobei die Ladebodenauflage zumindest ein Rastelement umfasst.

Im Stand der Technik sind Halteprofile für Ladeböden bekannt.

So sind aus dem Dokument DE 10 2010 056 400 A1 ein Ladeboden für einen Laderaum, der eine Ladebodenplatte umfasst, die an mindestens einer Seite ein zahnförmiges Profil zum Eingriff in ein komplementäres kraftfahrzeugseitiges Halteprofil aufweist sowie ein Verfahren zum Verstellen eines Laderaumvolumens bekannt.

Aus dem Dokument DE 10 2016 013 687 A1 ist eine Befestigungsvorrichtung zur Befestigung einer Ladebodenabstützung einer Kofferraumanordnung an einer Seitenwand der Kofferraumanordnung für ein Fahrzeug bekannt. Die Seitenwand weist eine stoffschlüssig integrierte Rastschnittstelle auf, die in eine Rastgegenschnittstelle einer Ladebodenabstützung einrastbar ist.

Aus dem Dokument DE 20 2015 008 707 U1 ist ein Kraftfahrzeug mit einer Vorrichtung zum Halten eines Ladebodens bekannt. Das Kraftfahrzeug umfasst einen heckseitigen Laderaum, der eine Vorrichtung zum Halten des Ladebodens aufweist, die einstückig mit einem Verkleidungsteil hergestellt wird und eine Durchgangsöffnung des Ladebodens durchsetzt.

Dokument US 2015/251712 A1 offenbart einen im Boden eines Fahrzeugs integrierten Aufbewahrungsbehälter. Der Aufbewahrungsbehälter umfasst ein Gehäuse mit einem Kragen, einer Unterseite und mehreren Seitenflächen, die sich zwischen dem Kragen und der Unterseite erstrecken. Die Seitenflächen definieren jeweils eine obere Fläche und eine Zwischenfläche, die sich kontinuierlich um einen inneren Umfang des Gehäuses erstrecken und parallel zum Kragen und zur unteren Fläche ausgerichtet sind. Ein Deckel ist so konfiguriert, dass er in einer ersten Aufbewahrungsposition auf der oberen Oberfläche ruht, wenn der Deckel eine erste Ausrichtung hat, und in einer zweiten Aufbewahrungsposition auf der Zwischenoberfläche ruht, wenn der Deckel eine zweite Ausrichtung hat, wobei die zweite Ausrichtung relativ zur ersten Ausrichtung um 90 Grad gedreht ist.

Aus dem Dokument DE 10 2014 015030 A1 ist eine Vorrichtung zur Abdeckung von ein oder mehreren Stauräumen im Boden eines Kofferraums eines Kraftfahrzeugs bekannt, die eine Kofferraummatte aufweist. Die Kofferraummatte ist zweiteilig und an der Teilstelle flexibel ausgebildet und ist über Befestigungselemente mit einer an der Karosserie befestigten und mit Stauräumen versehenen Beladebox verbindbar.

Im Stand der Technik werden zur Fixierung von Ladeböden im Bereich der Rücksitzbänke eines Fahrzeuges Zusatzelemente zur Fixierung, insbesondere in Z-Richtung, verschweißt oder verschraubt.

Aufgabe der vorliegenden Erfindung ist es, ein System bereitzustellen, dass eine leichter zu produzierende, kostengünstigere und verbesserte Ladebodenfixierung ermöglicht.

Diese Aufgabe wird durch ein System mit den Merkmalen des Patentanspruchs 1 gelöst. Vorteilhafte Weiterbildungen und Ausführungen sind Gegenstand der Beschreibung und Beschreibung der Figuren.

Gegenstand der vorliegenden Erfindung ist ein System zur Ladebodenfixierung in einem Kraftfahrzeug, umfassend eine Ladebodenauflage und zumindest einen Ladeboden, wobei die Ladebodenauflage zumindest ein Rastelement umfasst, wobei der Ladeboden zumindest ein Formelement aufweist, das zum Einrasten auf das zumindest eine Rastelement der Ladebodenauflage eingerichtet ist, wobei das System basierend auf dem Einrasten eingerichtet ist, den Ladeboden auf der Ladebodenauflage zu arretieren, und wobei das Rastelement als Klickelement ausgebildet ist, das eingerichtet ist, bei einem Aufschieben des Ladebodens durch das Formelement des Ladebodens zusammendrückbar zu sein und bei Erreichen einer Endposition des Aufschiebevorgangs sich zu entfalten und dadurch den Ladeboden zu arretieren, wobei das System eingerichtet ist, den Ladeboden auf der Ladebodenauflage in einer X-Richtung und in einer Z-Richtung zu arretieren, wobei das Rastelement als Haken, insbesondere Verrasthaken, ausgebildet ist.

Erfindungsgemäß weist der Ladeboden zumindest ein Formelement auf, das zum Einrasten auf das zumindest eine Rastelement der Ladebodenauflage eingerichtet ist, wobei das System basierend auf dem Einrasten eingerichtet ist, den Ladeboden auf der Ladebodenauflage zu arretieren. Dabei ist der Ladeboden, insbesondere das Formelement, derart ausgebildet und eingerichtet, dass der Ladeboden an zumindest einem weiteren Bauelement des Kraftfahrzeuges, insbesondere dem Rastelement der Ladebodenauflage, fixierbar bzw. arretierbar ist. In der Regel ist das System im Bereich einer Rücksitzbank eines Kraftfahrzeuges angeordnet. Das System bietet den Vorteil, dass eine Ladebodenfixierung ohne zusätzliche Anbauteile realisiert werden kann.

Das Rastelement ist in der Regel auf der Ladebodenauflage im Spritzgussverfahren aufbringbar. Das Rastelement ist als männlicher Teil eines Schieb-/Steckverschlusses ausgebildet. Das Rastelement ist als Vorsprung ausgebildet, der eingerichtet ist, bei einem Aufschieben des Ladebodens auf die Ladebodenauflage in das Formelement einzugreifen.

Typischerweise ist das Rastelement als Klickelement ausgebildet, das eingerichtet ist, bei dem Aufschieben des Ladebodens durch das Formelement des Ladebodens zusammendrückbar zu sein und bei Erreichen einer Endposition des Aufschiebevorgangs sich zu entfalten und dadurch den Ladeboden zu arretieren. Das Rastelement ist in der Regel zusammendrückbar ausgebildet, wobei das Rastelement zumindest einen Schlitz aufweist, der ein Zusammendrücken des Rastelementes ermöglicht.

Das Rastelement erstreckt sich in der Regel in einem rechten Winkel zur Ladebodenauflage und ist zwischen 1 mm und 50 mm, insbesondere zwischen 20 mm und 30 mm breit, wobei das Rastelement mittig den zumindest einen Schlitz aufweist. Der Schlitz ist in der Regel in einem rechten Winkel zur Ladebodenauflage ausgebildet und weist eine Breite zwischen 1 mm und 5 mm, insbesondere zwischen 3 mm und 4 mm, auf.

Das Formelement ist in der Regel korrespondierend zu der Geometrie des Rastelementes ausgebildet. Das Formelement ist als weiblicher Teil des Schieb-/Steckverschlusses ausgebildet. Das Formelement weist zumindest eine Aussparung auf, die eingerichtet ist, den zumindest einen Vorsprung des Rastelementes, den männlichen Teil des Schieb-/Steckverschlusses aufzunehmen. Das Formelement des Ladebodens bietet den Vorteil, dass es einfach im Herstellungsprozess des Ladebodens realisierbar ist und somit zu keinen Sonderprozessen führt.

Das Formelement ist in der Regel zwischen 10 mm und 50 mm, insbesondere zwischen 30 mm und 40 mm tief in den Ladeboden eingeprägt. Das Formelement weist eine Breite zwischen 10 mm und 50 mm, insbesondere zwischen 30 mm und 45 mm auf.

Das System ist eingerichtet, den Ladeboden auf der Ladebodenauflage in einer X-Richtung und/oder in einer Z-Richtung zu arretieren. Das System ist derart eingerichtet, dass der Ladeboden mit dem zumindest einen Formelement auf das Rastelement der Ladebodenauflage aufgeschoben werden kann. Durch das Aufschieben des Ladebodens auf die Ladebodenauflage verrastet das Rastelement mit dem Vorsprung und der Auslenkung auf dem Formelement sowohl in X-Richtung als auch in Z-Richtung.

Das System bietet somit den Vorteil, dass mit der eingebrachten Geometrie sowohl auf Zusatzbauteile verzichtet werden kann, als auch über die Auflage des Ladebodens eine X-Richtung und Z-Richtung der Hinterrasterung realisiert werden kann. Somit kann der Ladeboden sowohl in einer X-Richtung als auch in einer Z-Richtung arretiert werden.

In einer Weiterbildung ist das Formelement einstückig in den Ladeboden geprägt ausgebildet ist. Dabei ist das Formelement bereits während eines Pressvorgangs des Ladebodens in den Ladeboden einprägbar. Die Einbringung des Formelementes bedarf somit keines separaten Prozesses, sodass das Formelement im Herstellungsprozess des Ladebodens realisierbar ist.

In einer weiteren Weiterbildung ist das Formelement u-förmig ausgebildet, wobei die u-Form in dem Formelement eine Rastfläche ausbildet, die senkrecht zu einer Kontaktfläche des Ladenbodens mit der Ladebodenauflage ausgebildet ist. Das Formelement ist dabei als Aussparung in den Ladeboden eingeprägt ausgebildet. Die u-förmige Ausgestaltung des Formelementes bietet den Vorteil, dass das Rastelement in das Formelement seitlich eingeschoben werden kann.

In einer weiteren Weiterbildung ist die Rastfläche zumindest bereichsweise abgerundet oder abgeschrägt ausgebildet. Dabei ist die Rastfläche zumindest bereichsweise abgerundet oder abgeschrägt ausgebildet. Die abgerundete oder abgeschrägte Rastfläche des Formelements bietet den Vorteil, dass das Rastelement im Bereich der abgerundeten oder abgewinkelten Rastfläche des Formelementes aufrasten oder hinterrasten kann. Das Aufrasten oder Hinterrasten des Rastelements im Bereich der abgerundeten oder abgewinkelten Rastfläche des Formelementes führt zu einer Arretierung des Rastelements auf der zumindest einen abgerundeten oder abgewinkelten Rastfläche des Formelementes.

Das Rastelement weist in der Regel an dem dem Ladeboden zugewandten Ende des Vorsprungs eine Auslenkung auf, die eingerichtet ist, sich auf der Rastfläche des u-förmigen Formelementes zu verrasten bzw. aufzuliegen. In der Regel ist die Auslenkung als Erweiterung des Vorsprungs ausgebildet, die im Wesentlichen parallel zur Ladebodenauflage ausgebildet ist. Optional ist die Auslenkung ausgehend von dem Vorsprung abgewinkelt ausgebildet. In der Regel ist die Auslenkung T-förmig ausgebildet.

Das Rastelement ist als Haken, insbesondere als Rasthaken, ausgebildet. Das Rastelement ist in der Regel auf die Ladebodenauflage in einem Spritzgussverfahren aufgebracht. Das Rastelement weist ein ladebodenauflagennahes Ende und ein ladebodenauflagenfernes Ende auf. Das Rastelement ist an seinem ladebodenauflagenfernen Ende in einer X-Richtung T-förmig ausgebildet und in einer Z Richtung als umlaufende Z-Auflagefläche eingerichtet. Die Z-Auflagefläche entspricht der Auslenkung des Rastelementes.

In einer Weiterbildung ist das Rastelement eingerichtet, zumindest teilweise hinter oder auf das Formelement aufzurasten und/oder hinterzurasten. Dabei ist ein jeweiliges Rastelement in der Regel eingerichtet, mittels Hinterrastkräften in ein jeweiliges Formelement einzurasten.

In einer weiteren Weiterbildung ist das Formelement zu dem Rastelement geometrisch korrespondierend ausgebildet. Das Formelement und das Rastelement bilden zusammen in der Regel den Schieb-/Steckverschluss. Dabei ist das Formelement ein weiblicher Teil des Schieb-/Steckverschlusses und das Rastelement ist ein männlicher Teil des Schieb-/Steckverschlusses. Der Ladeboden mit dem Formelement ist eingerichtet, auf die Ladebodenauflage aufschiebbar und aufklickbar zu sein.

Das System umfasst einen Ladeboden zur Ladebodenfixierung.

Der Ladeboden weist zumindest ein Formelement auf, das in den Ladeboden geprägt ausgebildet ist und zur Aufnahme zumindest eines Rastelementes ausgebildet und eingerichtet ist.

Das Rastelement ist in der Regel durch ein Spritzgussverfahren werkzeugfallend auf der Ladebodenauflage hergestellt. Dabei ist das Rastelement als Rasthaken oder Widerhaken ausgestaltet. In der Regel weist das Rastelement den zumindest einen Schlitz auf, wodurch das Rastelement eingerichtet ist, bei einem Einschieben in das Formelement zusammendrückbar zu sein.

Das Formelement ist in den Ladeboden geprägt ausgebildet. Optional ist das Formelement derart in den Ladeboden geprägt ausgebildet, dass der Ladeboden zumindest teilweise unterbrochen ist. Das Formelement weist zumindest eine Aussparung auf, die eingerichtet ist, den Vorsprung des Rastelements aufzunehmen. Die Aussparung des Formelementes ist beispielsweise T-förmig ausgestaltet. Damit ist das Formelement als weiblicher Teil eines Schieb-/Klickverschlusses ausgebildet. Das Rastelement ist als männlicher Teil eines Schieb-/Klickverschlusses ausgebildet.

Im Folgenden wird ein Verfahren zur Herstellung eines Ladebodens umfassend ein Element für ein voranstehend beschriebenes System zur Ladebodenfixierung beschrieben.

In einem ersten Schritt wird der Ladeboden gepresst. In einem weiteren Schritt, der zeitgleich mit dem ersten Schritt erfolgt, wird zumindest ein Formelement während des Pressens in den Ladebodens geprägt.

In einem Verfahren zur Herstellung eines Rastelements für ein voranstehend beschriebenes System zur Ladebodenfixierung wird das Rastelement mittels Spritzgussverfahren werkzeugfallend auf der Ladebodenauflage hergestellt.

Die Erfindung ist anhand von Ausführungsformen in der Zeichnung schematisch dargestellt und wird unter Bezugnahme auf die Zeichnung weiter beschrieben, wobei die gleichen Komponenten mit gleichen Bezugsziffern gekennzeichnet sind. Es zeigt:
- Fig. 1: einen Ladeboden mit einem Formelement des Systems zur Ladebodenfixierung,
- Fig. 2: eine Draufsicht auf das System zur Ladebodenfixierung mit dem auf eine Ladebodenauflage aufgesetzten Ladeboden mit einem auf einem Rastelement verrasteten Formelement,
- Fig. 3: einen Längsschnitt durch das System zur Ladebodenfixierung mit dem Formelement und dem in das Formelement eingerasteten Rastelement,
- Fig. 4: eine Draufsicht auf das System zur Ladebodenfixierung mit dem Formelement und dem in das Formelement eingerasteten Rastelement,
- Fig. 5: eine perspektivische Ansicht des Rastelements in eingerastetem Zustand in dem Formelement des Systems zur Ladebodenfixierung,
- Fig. 6: eine schematische Seitenansicht des Systems zur Ladebodenfixierung mit dem Ladeboden mit dem Formelement und der Ladebodenauflage mit dem Rastelement.

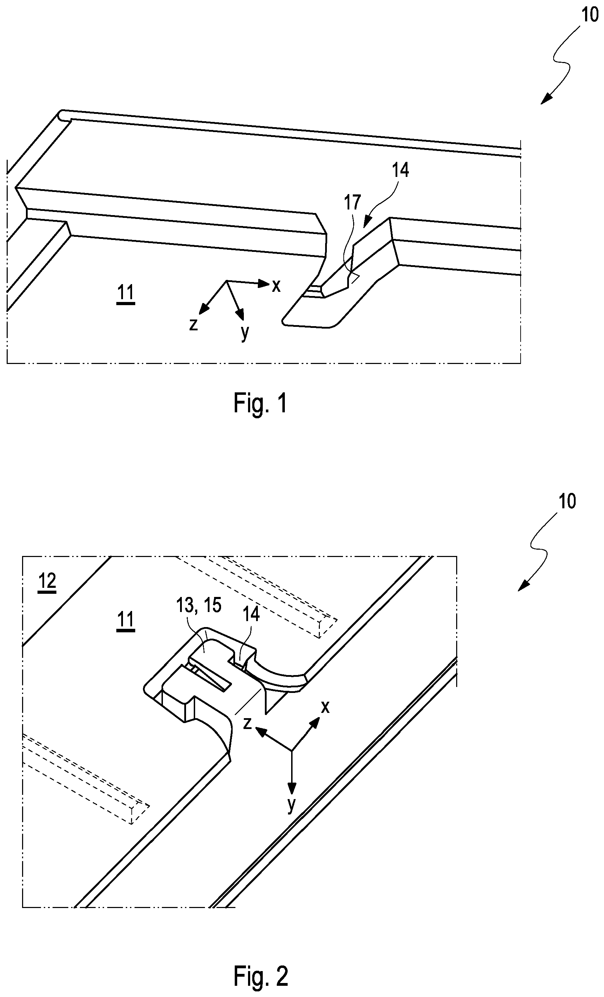

Figur 1 zeigt einen Ladeboden 11 mit einem Formelement 14 des Systems 10 zur Ladebodenfixierung. In der vorliegenden Ausführungsform weist der Ladeboden 11 ein u-förmig ausgebildetes Formelement 14 auf. Das u-förmig ausgebildete Formelement 14 ist dabei in den Ladeboden 11 geprägt ausgebildet. Das u-förmig ausgebildete Formelement 14 ist dabei in Z-Richtung in dem Ladeboden 11 ausgebildet.

Die u-förmige Ausbildung des Formelementes 14 ermöglicht ein Einschieben eines - nicht gezeigten - Rastelements. Das Formelement 14 ist u-förmig ausgebildet, wobei die u-Form in dem Formelement 14 eine Rastfläche 17 ausbildet, die senkrecht zu einer Kontaktfläche des Ladenbodens 11 mit einer - nicht gezeigten - Ladebodenauflage ausgebildet ist. Die Rastfläche 17 ist abgerundet oder abgeschrägt ausgebildet.

Figur 2 zeigt eine Draufsicht auf das System 10 zur Ladebodenfixierung mit dem auf die Ladebodenauflage 12 aufgesetzten Ladeboden 11 mit dem auf dem Rastelement 13 verrasteten Formelement 14.

Das Rastelement 13, das als Vorsprung 15 ausgebildet ist, ist auf der Ladebodenauflage 12 in der Regel durch ein Spritzgussverfahren werkzeugfallend hergestellt. Dabei ist das Rastelement 13 als Rasthaken oder Widerhaken ausgestaltet. Das Rastelement 13 weist einen ladebodenauflagennahes und ein ladebodenauflagenfernes Ende auf, wobei das Rastelement 13 an ihrem ladebodenauflagefernen Ende eine T-förmige Ausgestaltung aufweist.

Das Formelement 14 ist dabei in den Ladeboden 11 geprägt ausgebildet. Dabei ist das Formelement 14 derart in dem Ladeboden 11 geprägt ausgebildet, dass der Ladeboden 11 zumindest teilweise unterbrochen ist. Dabei ist das Formelement 14 insbesondere als Klickverschluss ausgebildet. Das Formelement 14 weist in X Richtung eine T-förmige Ausgestaltung auf.

Das Formelement 14 ist in der Regel geometrisch korrespondierend zu dem Rastelement 13 ausgebildet, um einen Schieb-/Klickverschluss bzw. einen Schieb-/Steckverschluss auszubilden. Der Ladeboden 11 mit dem Formelement 14 ist eingerichtet, auf die Ladebodenauflage 12 aufschiebbar bzw. aufklickbar zu sein. Während des Aufschiebens verrastet das Formelement 14 auf dem Rastelement 13 der Ladebodenauflage 12 sowohl in X- Richtung als auch in Z-Richtung.

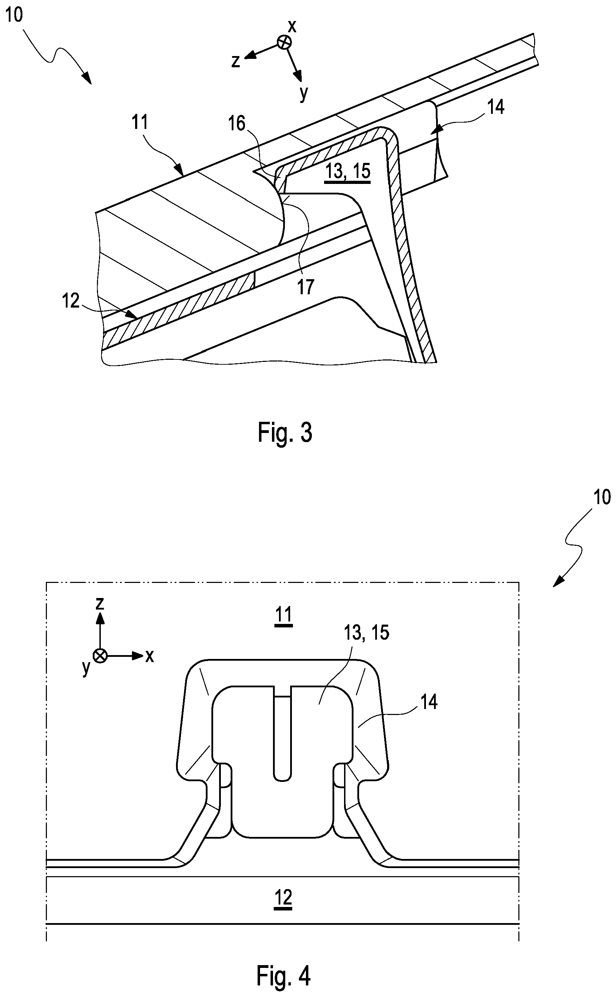

Figur 3 zeigt einen Längsschnitt durch das System 10 zur Ladebodenfixierung mit dem Formelement 14 und dem in das Formelement 14 eingerasteten Rastelement 13.

Das Rastelement 13 ist auf der Ladebodenauflage 12 ausgebildet. Das Rastelement 13 ist in der vorliegenden Ausführungsform als Vorsprung 15, insbesondere als Rasthaken ausgebildet. Das Rastelement 13 weist in der vorliegenden Ausführungsform zudem eine umlaufende Z Auflage bzw. eine Auslenkung 16 auf, die sich an einem ladebodenauflagefernen Ende des Rastelementes 13 parallel zur Ladebodenauflage 12 ausgehend vom dem Vorsprung 15 erstreckt.

Das Formelement 14 ist in dem Ladeboden 11 ausgebildet, wobei das Formelement 14 u-förmig ausgebildet ist, wobei die u-Form in dem Formelement 14 eine Rastfläche 17 ausbildet, die senkrecht zu einer Kontaktfläche des Ladenbodens 11 mit einer - nicht gezeigten - Ladebodenauflage 12 ausgebildet ist. Die Rastfläche 17 ist abgerundet oder abgeschrägt ausgebildet.

Das Formelement 14 ist korrespondierend zu der geometrischen Form des Rastelements 13 ausgebildet. **In** der vorliegenden Ausführungsform ist der Ladeboden 11 mit dem Formelement 14 auf die Ladebodenauflage 12 mit dem Rastelement 13 aufgesteckt dargestellt. Dabei ist das Rastelement 13 eingerichtet, durch Aufschieben des Formelements 14 in X- Richtung zu arretieren und durch das Verrasten einer Auslenkung 16 bzw. einer Z-Auflage auf der abgeschrägten Rastfläche des u-förmigen Formelementes 14 in Z-Richtung zu arretieren.

Figur 4 zeigt eine Draufsicht auf das System 10 zur Ladebodenfixierung mit dem Formelement 14 und dem in das Formelement 14 eingerasteten Rastelement 13, das als Vorsprung 15 ausgebildet ist. Das Formelement 14 ist als weiblicher Teil des Schieb-/Steckverschlusses ausgebildet, während das Rastelement als männlicher Teil des Schieb-/Steckverschlusses ausgebildet ist.

Der Ladeboden 11 mit dem Formelement 14 ist eingerichtet, bei einem Aufschieben auf die Ladebodenauflage 12 auf dem Rastelement 13 zu verhaken und eine Rastverbindung, insbesondere eine Schieb-/Steckverbindung, sowohl in X-Richtung als auch in Z-Richtung auszubilden.

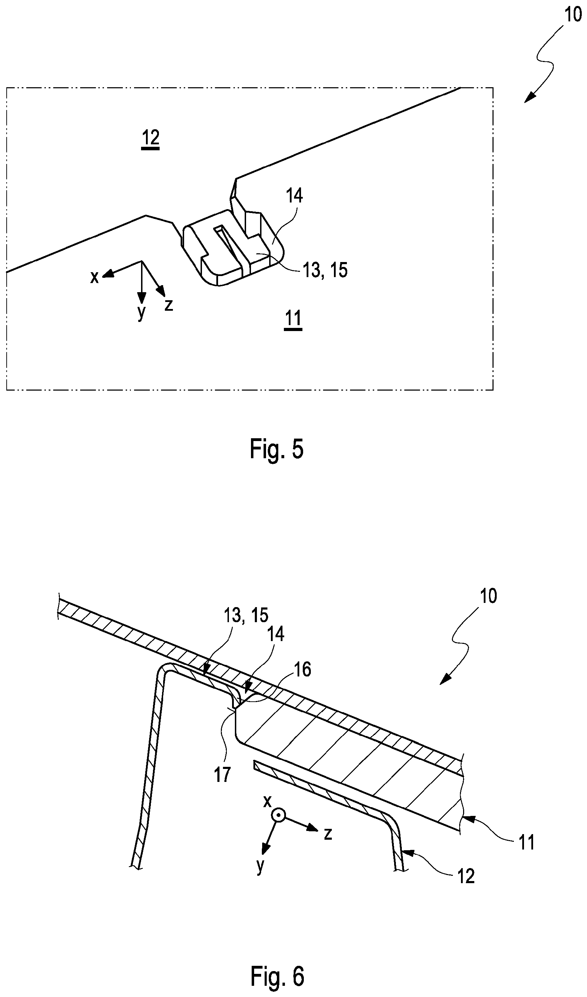

Figur 5 zeigt eine perspektivische Ansicht des Rastelements 13 in eingerastetem Zustand in dem Formelement 14 des Systems 10 zur Ladebodenfixierung. Bei dem System 10 zur Ladebodenfixierung ist der Ladeboden 11 mit dem Formelement 14 auf die Ladebodenauflage 12 mit dem Rastelement 13 aufgeschoben bzw. aufgerastet und somit sowohl in X-Richtung als auch in Z-Richtung verrastet. Dabei ist das Formelement 14 auf das Rastelement 13 aufgeschoben, sodass der zumindest eine Vorsprung 15 des Rastelementes 13 in die zumindest eine Aussparung des Formelementes 14 eingreift und verrastet.

Figur 6 zeigt eine schematische Seitenansicht des Systems 10 zur Ladebodenfixierung mit dem Ladeboden 11 mit dem Formelement 14 und dem Rastelement 13 der Ladebodenauflage 12. In der vorliegenden Ausführungsform ist gezeigt, dass in einem verrastetem Zustand des Rastelements 13 in dem Formelement 14 des Ladebodens 11 das Rastelement 13 an einer abgerundeten bzw. abgeschrägten Fläche des Formelementes 14, einer Rastfläche 17, sowohl in X-Richtung als auch in Z-Richtung verrastet. Zudem ist gezeigt, dass das Rastelement 14 aus dem Vorsprung 15 und der Auslenkung 16 ausgebildet ist.

### Bezugszeichenliste

- 10: System
- 11: Ladeboden
- 12: Ladebodenauflage
- 13: Rastelement
- 14: Formelement
- 15: Vorsprung
- 16: Auslenkung
- 17: Rastfläche

## Patentansprüche

1. System (10) zur Ladebodenfixierung in einem Kraftfahrzeug, umfassend eine Ladebodenauflage (12) und zumindest einen Ladeboden (11), wobei die Ladebodenauflage (12) zumindest ein Rastelement (13) umfasst, wobei der Ladeboden (11) zumindest ein Formelement (14) aufweist, das zum Einrasten auf das zumindest eine Rastelement (13) der Ladebodenauflage (12) eingerichtet ist, wobei das System (10) basierend auf dem Einrasten eingerichtet ist, den Ladeboden (11) auf der Ladebodenauflage (12) zu arretieren, und wobei das Rastelement (13) als Klickelement ausgebildet ist, das eingerichtet ist, bei einem Aufschieben des Ladebodens (11) durch das Formelement (14) des Ladebodens (11) zusammendrückbar zu sein und bei Erreichen einer Endposition des Aufschiebevorgangs sich zu entfalten und dadurch den Ladeboden (11) zu arretieren, wobei das System (10) eingerichtet ist, den Ladeboden (11) auf der Ladebodenauflage (12) in einer X-Richtung und in einer Z-Richtung zu arretieren, **dadurch gekennzeichnet, dass** das Rastelement (13) als Haken, insbesondere Verrasthaken, ausgebildet ist.

2. System (10) nach Anspruch 1, **dadurch gekennzeichnet, dass** das Formelement (14) einstückig in den Ladeboden (11) geprägt ausgebildet ist.

3. System (10) nach Anspruch 2, **dadurch gekennzeichnet, dass** das Formelement (14) u-förmig ausgebildet ist, wobei die u-Form in dem Formelement (14) eine Rastfläche (17) ausbildet, die senkrecht zu einer Kontaktfläche des Ladenbodens (11) mit der Ladebodenauflage (12) ausgebildet ist.

4. System (10) nach Anspruch 3, **dadurch gekennzeichnet, dass** die Rastfläche (17) zumindest bereichsweise abgerundet oder abgeschrägt ausgebildet ist.

5. System (10) nach Anspruch 1, **dadurch gekennzeichnet, dass** das Rastelement (13) eingerichtet ist, zumindest teilweise hinter oder auf das Formelement (14) aufzurasten oder hinterzurasten.

6. System (10) nach einem der voranstehenden Ansprüche, **dadurch gekennzeichnet, dass** das Formelement (14) zu dem Rastelement (13) geometrisch korrespondierend ausgebildet ist.

## Claims

1. System (10) for fixing a loading floor in a motor vehicle, comprising a loading floor support (12) and at least one loading floor (11), wherein the loading floor support (12) comprises at least one latching element (13), wherein the loading floor (11) has at least one molded element (14) which is configured to latch onto the at least one latching element (13) of the loading floor support (12), wherein the system (10) is configured to lock the loading floor (11) onto the loading floor support (12) on the basis of the locking process, and wherein the latching element (13) is configured as a clicking element which is arranged to be compressible by the molded element (14) of the loading floor (11) when the loading floor (11) is pushed on and to be deployed when an end position of the pushing on process is reached, thereby locking the loading floor (11), wherein the system (10) is configured to lock the loading floor (11) on the loading floor support (12) in an X direction and in a Z direction, **characterized in that** the latching element (13) is configured as a hook, in particular as a latching hook.

2. System (10) according to claim 1, **characterized in that** the molded element (14) is shaped in one piece in the loading floor (11).

3. System (10) according to claim 2, **characterized in that** the molded element (14) is U-shaped, wherein the U-shape in the molded element (14) forms a latching surface (17), which is perpendicular to a contact surface of the loading floor (11) with the loading floor support (12).

4. System (10) according to claim 3, **characterized in that** the latching surface (17) is configured to be rounded or beveled in at least some sections.

5. System (10) according to claim 1, **characterized in that** the latching element (13) is configured to latch on or latch at least partially behind or onto the molded element (14).

6. System (10) according to any one of the preceding claims, **characterized in that** the molded element (14) is configured to correspond geometrically to the latching element (13).

## Revendications

1. Système (10) de fixation de plancher de chargement dans un véhicule automobile, comprenant un support de plancher de chargement (12) et au moins un plancher de chargement (11), dans lequel le support de plancher de chargement (12) comprend au moins un élément d'encliquetage (13), dans lequel le plancher de chargement (11) présente au moins un élément moulé (14) qui est conçu pour l'encliquetage sur l'au moins un élément d'encliquetage (13) du support de plancher de chargement (12), dans lequel le système (10) est conçu sur la base de l'encliquetage afin de bloquer le plancher de chargement (11) sur le support de plancher de chargement (12), et dans lequel l'élément d'encliquetage (13) est formé comme élément à clic qui est conçu afin d'être compressible par l'élément moulé (14) du plancher de chargement (11) lorsque le plancher de chargement (11) est poussé et de se déployer lorsque le processus de poussée atteint une position finale et de bloquer ainsi le plancher de chargement (11), dans lequel le système (10) est conçu afin de bloquer le plancher de chargement (11) sur le support de plancher de chargement (12) dans un sens X et dans un sens Z, **caractérisé en ce que** l'élément d'encliquetage (13) est formé comme un crochet, en particulier un crochet d'encliquetage.

2. Système (10) selon la revendication 1, **caractérisé en ce que** l'élément moulé (14) est formé de manière gaufrée d'un seul tenant dans le plancher de chargement (11).

3. Système (10) selon la revendication 2, **caractérisé en ce que** l'élément moulé (14) est formé en U, dans lequel le U forme dans l'élément moulé (14) une surface d'encliquetage (17) qui est formée perpendiculairement à une surface de contact du plancher de chargement (11) avec le support de plancher de chargement (12).

4. Système (10) selon la revendication 3, **caractérisé en ce que** la surface d'encliquetage (17) est formée au moins par endroits de manière arrondie ou chanfreinée.

5. Système (10) selon la revendication 1, **caractérisé en ce que** l'élément d'encliquetage (13) est conçu afin de s'encliqueter au moins partiellement derrière ou sur l'élément moulé (14).

6. Système (10) selon l'une quelconque des revendications précédentes, **caractérisé en ce que** l'élément moulé (14) est formé de manière correspondante géométriquement à l'élément d'encliquetage (13).
